# EUROPEAN PATENT SPECIFICATION

(11) **EP 4 355 170 B1**
(45) Date of publication and mention of the grant of the patent: **23.04.2025**
(21) Application number: 22731000.0
(22) Date of filing: 09.06.2022
(51) Int. Cl.: A45F 3/08, A61H 3/00, B25J 9/00

(54) **A WEARABLE SUPPORT STRUCTURE**
TRAGBARE STÜTZSTRUKTUR
STRUCTURE DE SUPPORT PORTABLE

(30) Priority: 14.06.2021 NL 2028449
(43) Date of publication of application: 24.04.2024
(73) Proprietor: Intespring B.V, 2289 EX Rijswijk (NL)
(72) Inventor: BAAS, Frank Gerardus, 2289 EX Rijswijk (NL); VAN DE WIJDEVEN, Trebsijg, 2289 EX Rijswijk (NL)
(74) Representative: Algemeen Octrooi- en Merkenbureau B.V.
(86) International application number: PCT/NL2022/050321
(87) International publication number: WO 2022/265494

(56) References cited:
- KR-A- 20190 048 130
- US-A1- 2016 158 593
- US-A1- 2016 229 065

## Description

The present disclosure relates to a wearable support structure for at least partly relieving a human body during walking and while said human body is carrying a load at the back or the hip of the human body.

The wearable support structure according to the present disclosure comprises two foot attachments, wherein one of said two foot attachments is arranged to be connected to a left foot of said human body and wherein the other of said two foot attachments is arranged to be connected to a right foot of said human body, a load support arranged to support said load while said human body is carrying said load and two leg structures.

NL2017521 discloses a wearable support structure comprising two foot attachments, a load support and leg structures. Although this support structure functions well, it may be improved as regards ease of use while realising a relative large relief of a use and being relative comfortable to the user. US2016/229065A1 discloses an exoskeleton and method of increasing the flexibility of an exoskeleton hip joint.

An objective of the present disclosure is to provide a wearable support structure that is relatively easy to use while realising a relative large relieve to a user and being relative comfortable to the user.

The objective is achieved by the wearable support structure according to claim 1 by providing each of the two leg structures with:
- a first rigid member arranged for supporting said load support and pivotally connected, via a first pivot arrangement, to said load support, wherein a pivot axis of a first pivot of said first pivot arrangement, during use, is extending in a virtual plane that is parallel to a transverse plane of said human body and, preferably, at least substantially horizontal, preferably, wherein said first pivot arrangement is provided below said load support;
- a second rigid member arranged for supporting said load support, via said first rigid member, and pivotally connected, via a second pivot arrangement, to said first rigid member;
- a third rigid member arranged for supporting said load support via said first rigid member and said second rigid member, and pivotally connected, via a third pivot arrangement, to said second rigid member and pivotally connected, via a fourth pivot arrangement, to a respective one of said two foot attachments;
wherein said first rigid member is movable between a first position and a second position such that a minimum distance between said second pivot arrangement and said load support varies during a gait cycle of said human body.

By providing the first rigid member in addition to the second and third rigid member in combination with the first, second, third and fourth pivot arrangement the need for aligning the wearable support structure with a hip of the user is no longer required. The present disclosure relies at least partly on the insight that for the known wearable support structure a relative accurate alignment between the wearable support structure and the hip of the user is required for realising a relative comfortable experience to the user. A misalignment may cause the leg structure of the wearable support structure to be longer or shorter than the corresponding leg of the user. It was found that even in situations wherein the wearable support structure was aligned with the hip of the user, during use of the wearable support structure, such as during walking, a misalignment may occur due to the fact that the human body is more mobile than the wearable support structure.

The provision of the first, second, third and fourth pivot arrangement increases the mobility of the wearable support structure and thereby avoiding, or at least significantly reducing the risk, of misalignment during use of the wearable support structure. It is to be understood that the first, second, third and fourth pivot arrangement allow the wearable support structure to provide a comfortable experience to the user while relieving the user even if the wearable support structure is not exactly following the human body during for instance walking or bending.

In addition, it is pointed out that for realising a relative comfortable experience to the user, using the wearable support structure according to the present disclosure, there is no longer the need, or at least a lesser need, for aligning the wearable support structure to the dimensions of the body of the user.

In this regard, it is beneficial if said first rigid member is further arranged for moving between said first position and said second position, such that, a minimum distance between said first pivot arrangement and said third pivot arrangement varies during said gait cycle. This is beneficial for realising a wearable support structure that is relatively easy to use while realising a relative large relieve to a user and being relative comfortable to the user.

Preferably, said first rigid member is further arranged for moving between said first position and said second position, such that, in a stance phase of said human body, a minimum distance between said second pivot arrangement and said load support is different for said two leg structures. This is beneficial for realising a wearable support structure that is relatively easy to use while realising a relative large relieve to a user and being relative comfortable to the user.

In an embodiment of the wearable support structure according to the present disclosure, a pivot axis of a first pivot of said second pivot arrangement, during a swing phase of a corresponding leg of said human body, is at least substantially parallel to a bending axis of a hip joint of said human body, preferably parallel to a bending axis of a hip joint of said human body. This is beneficial for realising a wearable support structure that is relatively easy to use while realising a relative large relieve to a user and being relative comfortable to the user.

It is advantageous, if, during a stance phase of a corresponding leg of said human body, a pivot axis of a first pivot of said third pivot arrangement is at least substantially parallel to a bending axis of a knee joint of said corresponding leg of said human body, preferably parallel to a bending axis of a knee joint of said corresponding leg of said human body. This is beneficial for realising a wearable support structure that is relatively easy to use while realising a relative large relieve to a user and being relative comfortable to the user.

Preferably, during a stance phase of a corresponding leg of said human body, a pivot axis of a first pivot of said fourth pivot arrangement is at least substantially parallel to a bending axis of an ankle joint of said corresponding leg of said human body, preferably parallel to a bending axis of an ankle joint of said corresponding leg of said human body. This is beneficial for realising a wearable support structure that is relatively easy to use while realising a relative large relieve to a user and being relative comfortable to the user. The present disclosure relies at least partly on the insight the known wearable support structure has a relative low mobility, during use, in the region of the ankle of the user. Because of this limited mobility of the wearable support structure, the mobility of the foot of the user is limited due to attachment of the foot attachments to the body of the user. The pivot axis of the first pivot of the fourth pivot arrangement being parallel to a bending axis of the ankle joint of said corresponding leg of said human body allows the user to move a foot relative to the lower leg without being hindered by the wearable support structure thereby allowing a more natural movement of the foot during walking.

In an embodiment of the wearable support structure according to the present disclosure, said first pivot arrangement comprises a second pivot, wherein a pivot axis of said second pivot is perpendicular to said pivot axis of said first pivot of said first pivot arrangement. This is beneficial for realising a wearable support structure that is relatively easy to use while realising a relative large relieve to a user and being relative comfortable to the user.

In this regard, it is preferable if said second pivot of said first pivot arrangement is provided between said first rigid member and said first pivot of said first pivot arrangement. This is beneficial for realising a wearable support structure that is relatively easy to use while realising a relative large relieve to a user and being relative comfortable to the user.

Preferably, said second pivot arrangement comprises a second pivot and/or a third pivot, wherein pivot axes of said first pivot, second pivot and third pivot of said second pivot arrangement are arranged perpendicular to each other, preferably wherein said second pivot and/or said third pivot are provided between said first pivot of said second pivot arrangement and said second rigid member. This is beneficial for realising a wearable support structure that is relatively easy to use while realising a relative large relieve to a user and being relative comfortable to the user.

In this regard, it is beneficial if said second pivot of said second pivot arrangement is arranged such that, during use of the wearable support structure, said pivot axis of said second pivot of said second pivot arrangement is substantially parallel to a thigh of a corresponding leg of said user. This is beneficial for realising a wearable support structure that is relatively easy to use while realising a relative large relieve to a user and being relative comfortable to the user.

In this regard, it is beneficial if said wearable support structure, preferably said second pivot arrangement, comprises a biasing device for biasing said second rigid member relative to said first rigid member about said pivot axis of said second pivot of said second pivot arrangement.

Preferably, said biasing device is arranged for biasing, during use, said leg of said user towards a predetermined orientation for walking. This is beneficial for realising a wearable support structure that is relatively easy to use while realising a relative large relieve to a user and being relative comfortable to the user. The predetermined orientation may correspond to a position of the leg and the foot wherein the front side of the foot is biased into a walking direction. Preferably, said biasing device comprises a spring element.

Said fourth pivot arrangement comprises a second pivot, wherein a pivot axis of said second pivot is perpendicular to said pivot axis of said first pivot of said third pivot arrangement. This is beneficial for realising a wearable support structure that is relatively easy to use while realising a relative large relieve to a user and being relative comfortable to the user. The present disclosure relies at least partly on the insight the known wearable support structure has a relative low mobility, during use, in the region of the ankle of the user. Because of this limited mobility of the wearable support structure, the mobility of the foot of the user is limited due to attachment of the foot attachments to the body of the user. The pivot axis of the second pivot being of the fourth pivot arrangement being perpendicular to said pivot axis of said first pivot of said third pivot arrangement allows the user to move a foot relative to the lower leg without being hindered by the wearable support structure thereby allowing a more natural movement of the foot during walking.

In this regard, it is preferable if said second pivot of said third pivot arrangement is provided between said third rigid member and said first pivot of said third pivot arrangement. This is beneficial for realising a wearable support structure that is relatively easy to use while realising a relative large relieve to a user and being relative comfortable to the user.

In a practical embodiment of the wearable support structure according to the present disclosure, said wearable support structure is arranged for being only connected to said human body via said load support and said two foot attachments. This is beneficial for realising a wearable support structure that is relatively easy to use while realising a relative large relieve to a user and being relative comfortable to the user.

Preferably, said second rigid member and said third rigid member are arranged for being provided, during use, at a side of a leg of said human body that is opposite to the other leg of said human body. This is beneficial for realising a wearable support structure that is relatively easy to use while realising a relative large relieve to a user and being relative comfortable to the user.

It is advantageous, if said pivot axis of said first pivot of said first pivot arrangement, said pivot axis of said first pivot of said second pivot arrangement, said pivot axis of said first pivot of said third pivot arrangement and/or said pivot axis of said first pivot of said fourth pivot arrangement are arranged for being, during use, parallel to a coronal plane of said human body or substantially perpendicular to a sagittal plane of said human body. This is beneficial for realising a wearable support structure that is relatively easy to use while realising a relative large relieve to a user and being relative comfortable to the user.

Preferably, each of said two leg structures comprises a fourth rigid member that is provided between said fourth pivot arrangement and a fifth pivot arrangement of said wearable support structure that is attached to said foot attachment. This is beneficial for realising a wearable support structure that is relatively easy to use while realising a relative large relieve to a user and being relative comfortable to the user.

By providing the fourth rigid member between the fourth pivot arrangement and the fifth pivot arrangement the mobility of the wearable support structure may correspond to a relative large extent to the mobility of the ankle of the user. This is beneficial for providing a wearable support structure that is relatively easy to use while realising a relative large relieve to a user and being relative comfortable to the user. The present disclosure relies at least partly on the insight the known wearable support structure has a relative low mobility, during use, in the region of the ankle of the user. Because of this limited mobility of the wearable support structure, the mobility of the foot of the user is limited due to attachment of the foot attachments to the body of the user. The wearable support structure according to the present disclosure allows the user to move a foot relative to the lower leg without being hindered by the wearable support structure thereby allowing a more natural movement of the foot during walking.

In this regard, it is beneficial if said fifth pivot arrangement is arranged for being provided, during use, behind the back of a foot of said human body. This is beneficial for realising a wearable support structure that is relatively easy to use while realising a relative large relieve to a user and being relative comfortable to the user.

Preferably, each of said two foot attachment is formed as a shoe. This is beneficial for realising a wearable support structure that is relatively easy to use while realising a relative large relieve to a user and being relative comfortable to the user.

Preferably, said first pivot, during use, is provided behind the back of said human body. This is beneficial for allowing the user to have a more upright position. The user does not need to lean forward to compensate for the weight of the load. That is because the load itself is directly supported by the support structure.

According to the wearable support structure according to the present disclosure, the force exerted by the load due to gravity is not first transferred into a forward direction towards the hips of the user before being transferred downwardly towards the feet of the user. The force exerted by the load is transferred from the load support directly downwards towards the foot attachments. Alternatively, the force exerted by the load may first be transferred sideways before being transferred downwards towards the foot attachments.

In an embodiment, said fifth pivot arrangement is releasably connected, preferably releasably connected via a bolt, to a respective one of said foot attachments.

Preferably, each of said two leg structures comprises a first dampening arrangement for dampening said leg structure during a stance phase of said corresponding leg of said user.

In this regard it is beneficial if said first dampening arrangement dampens pivoting of said first pivot of said third pivot arrangement during said stance phase.

Preferably, said first dampening arrangement comprises a first damper that at a first side thereof is connected to said second rigid member and a second side thereof, opposite of said first side, is connected to said third rigid member.

Preferably, said third pivot arrangement and/or said first dampening arrangement is arranged for allowing said third rigid member to pivot relative to said second rigid member during a swing phase of said corresponding leg of said human body and to lock said third rigid member in a position relative to said second rigid member during said stance phase of said corresponding leg of said human body.

Preferably, said wearable support structure comprises a second dampening element arranged for dampening a movement of said second pivot arrangement relative to said first pivot arrangement. This is beneficial for generating an upward force onto the load support during a stance phase and/or dampening a movement of the hip of the user relative to the load support.

According to a second aspect the present disclosure relates to a wearable support structure for at least partly relieving a human body, preferably during walking, while said human body is carrying a load at the back or the hip of said human body, said wearable support structure comprising:
- a foot attachment, wherein said foot attachment is arranged to be connected to a left foot of said human body or a right foot of said human body;
- a load support arranged to support said load while said human body is carrying said load; and
- a leg structure comprising:
   - a first rigid member arranged for supporting said load support and pivotally connected, via a first pivot arrangement, to said load support, wherein a pivot axis of a first pivot of said first pivot arrangement, during use, is extending in a virtual plane that is parallel to a transverse plane of said human body and, preferably, at least substantially horizontal, preferably, wherein said first pivot arrangement is provided below said load support;
   - a second rigid member arranged for supporting said load support, via said first rigid member, and pivotally connected, via a second pivot arrangement, to said first rigid member;
   - a third rigid member arranged for supporting said load support via said first rigid member and said second rigid member, and pivotally connected, via a third pivot arrangement, to said second rigid member and pivotally connected, via a fourth pivot arrangement, to said foot attachment;
wherein said first rigid member is movable between a first position and a second position such that a minimum distance between said second pivot arrangement and said load support varies during a gait cycle of said human body.

Embodiments of the wearable support structure according to the second aspect correspond to embodiments of the wearable support structure according to the first aspect of the present disclosure. The advantages of the wearable support structure according to the second aspect correspond to advantages of the wearable support structure according to first aspect of the present disclosure presented previously.

By providing the wearable support structure according to the second aspect with only one foot attachment and one leg structure a relative lightweight structure may be realised while allowing to provide support the a human body.

In addition, the wearable support structure according to the second aspect may for instance be beneficial for support a disabled person having one relative strong leg and one relative weak or injured leg, wherein the leg structure and the foot attachment correspond to the relative weak or injured leg of the human body.

In this regard, it is beneficial if said first rigid member is further arranged for moving between said first position and said second position, such that, a minimum distance between said first pivot arrangement and said third pivot arrangement varies during said gait cycle. This is beneficial for realising a wearable support structure that is relatively easy to use while realising a relative large relieve to a user and being relative comfortable to the user.

In an embodiment of the wearable support structure according to the present disclosure, a pivot axis of a first pivot of said second pivot arrangement, during a swing phase of a corresponding leg of said human body, is at least substantially parallel to a bending axis of a hip joint of said human body, preferably parallel to a bending axis of a hip joint of said human body. This is beneficial for realising a wearable support structure that is relatively easy to use while realising a relative large relieve to a user and being relative comfortable to the user.

It is advantageous, if, during a stance phase of a corresponding leg of said human body, a pivot axis of a first pivot of said third pivot arrangement is at least substantially parallel to a bending axis of a knee joint of said corresponding leg of said human body, preferably parallel to a bending axis of a knee joint of said corresponding leg of said human body. This is beneficial for realising a wearable support structure that is relatively easy to use while realising a relative large relieve to a user and being relative comfortable to the user.

Preferably, during a stance phase of a corresponding leg of said human body, a pivot axis of a first pivot of said fourth pivot arrangement is at least substantially parallel to a bending axis of an ankle joint of said corresponding leg of said human body, preferably parallel to a bending axis of an ankle joint of said corresponding leg of said human body.

In an embodiment of the wearable support structure according to the present disclosure, said first pivot arrangement comprises a second pivot, wherein a pivot axis of said second pivot is perpendicular to said pivot axis of said first pivot of said first pivot arrangement. This is beneficial for realising a wearable support structure that is relatively easy to use while realising a relative large relieve to a user and being relative comfortable to the user.

In this regard, it is preferable if said second pivot of said first pivot arrangement is provided between said first rigid member and said first pivot of said first pivot arrangement. This is beneficial for realising a wearable support structure that is relatively easy to use while realising a relative large relieve to a user and being relative comfortable to the user.

Preferably, said second pivot arrangement comprises a second pivot and/or a third pivot, wherein pivot axes of said first pivot, second pivot and third pivot of said second pivot arrangement are arranged perpendicular to each other, preferably wherein said second pivot and/or said third pivot are provided between said first pivot of said second pivot arrangement and said second rigid member. This is beneficial for realising a wearable support structure that is relatively easy to use while realising a relative large relieve to a user and being relative comfortable to the user.

In this regard, it is beneficial if said second pivot of said second pivot arrangement is arranged such that, during use of the wearable support structure, said pivot axis of said second pivot of said second pivot arrangement is substantially parallel to a thigh of a corresponding leg of said user. This is beneficial for realising a wearable support structure that is relatively easy to use while realising a relative large relieve to a user and being relative comfortable to the user.

In this regard, it is beneficial if said wearable support structure, preferably said second pivot arrangement, comprises a biasing device for biasing said second rigid member relative to said first rigid member about said pivot axis of said second pivot of said second pivot arrangement.

Preferably, said biasing device is arranged for biasing, during use, said leg of said user towards a predetermined orientation for walking. This is beneficial for realising a wearable support structure that is relatively easy to use while realising a relative large relieve to a user and being relative comfortable to the user. The predetermined orientation may correspond to a position of the leg and the foot wherein the front side of the foot is biased into a walking direction. Preferably, said biasing device comprises a spring element.

Preferably, said fourth pivot arrangement comprises a second pivot, wherein a pivot axis of said second pivot is perpendicular to said pivot axis of said first pivot of said third pivot arrangement. This is beneficial for realising a wearable support structure that is relatively easy to use while realising a relative large relieve to a user and being relative comfortable to the user. The present disclosure relies at least partly on the insight the known wearable support structure has a relative low mobility, during use, in the region of the ankle of the user. Because of this limited mobility of the wearable support structure, the mobility of the foot of the user is limited due to attachment of the foot attachments to the body of the user. The pivot axis of the second pivot being of the fourth pivot arrangement being perpendicular to said pivot axis of said first pivot of said third pivot arrangement allows the user to move a foot relative to the lower leg without being hindered by the wearable support structure thereby allowing a more natural movement of the foot during walking.

In this regard, it is preferable if said second pivot of said third pivot arrangement is provided between said third rigid member and said first pivot of said third pivot arrangement. This is beneficial for realising a wearable support structure that is relatively easy to use while realising a relative large relieve to a user and being relative comfortable to the user.

In a practical embodiment of the wearable support structure according to the present disclosure, said wearable support structure is arranged for being only connected to said human body via said load support and said foot attachment. This is beneficial for realising a wearable support structure that is relatively easy to use while realising a relative large relieve to a user and being relative comfortable to the user.

Preferably, said second rigid member and said third rigid member are arranged for being provided, during use, at a side of a leg of said human body that is opposite to the other leg of said human body. This is beneficial for realising a wearable support structure that is relatively easy to use while realising a relative large relieve to a user and being relative comfortable to the user.

It is advantageous, if said pivot axis of said first pivot of said first pivot arrangement, said pivot axis of said first pivot of said second pivot arrangement, said pivot axis of said first pivot of said third pivot arrangement and/or said pivot axis of said first pivot of said fourth pivot arrangement are arranged for being, during use, parallel to a coronal plane of said human body or substantially perpendicular to a sagittal plane of said human body. This is beneficial for realising a wearable support structure that is relatively easy to use while realising a relative large relieve to a user and being relative comfortable to the user.

Preferably, said structure comprises a fourth rigid member that is provided between said fourth pivot arrangement and a fifth pivot arrangement of said wearable support structure that is attached to said foot attachment. This is beneficial for realising a wearable support structure that is relatively easy to use while realising a relative large relieve to a user and being relative comfortable to the user.

In this regard, it is beneficial if said fifth pivot arrangement is arranged for being provided, during use, behind the back of a foot of said human body. This is beneficial for realising a wearable support structure that is relatively easy to use while realising a relative large relieve to a user and being relative comfortable to the user.

Preferably, said foot attachment is formed as a shoe. This is beneficial for realising a wearable support structure that is relatively easy to use while realising a relative large relieve to a user and being relative comfortable to the user.

Preferably, said first pivot, during use, is provided behind the back of said human body. This is beneficial for allowing the user to have a more upright position. The user does not need to lean forward to compensate for the weight of the load. That is because the load itself is directly supported by the support structure.

In an embodiment, said fifth pivot arrangement is releasably connected, preferably releasably connected via a bolt, to said foot attachment.

Preferably, said leg structure comprises a first dampening arrangement for dampening said leg structure during a stance phase of said corresponding leg of said user.

In this regard it is beneficial if said first dampening arrangement dampens pivoting of said first pivot of said third pivot arrangement during said stance phase.

Preferably, said first dampening arrangement comprises a first damper that at a first side thereof is connected to said second rigid member and a second side thereof, opposite of said first side, is connected to said third rigid member.

Preferably, said third pivot arrangement and/or said first dampening arrangement is arranged for allowing said third rigid member to pivot relative to said second rigid member during a swing phase of said corresponding leg of said human body and to lock said third rigid member in a position relative to said second rigid member during said stance phase of said corresponding leg of said human body.

Preferably, said wearable support structure comprises a second dampening element arranged for dampening a movement of said second pivot arrangement relative to said first pivot arrangement. This is beneficial for generating an upward force onto the load support during a stance phase and/or dampening a movement of the hip of the user relative to the load support.

The above-mentioned and other features and advantages of the disclosure will be best understood from the following description referring to the attached schematic drawings. In the drawings, like reference numerals denote identical parts or parts performing an identical or comparable function or operation.
Fig. 1 shows a back view of a wearable support structure according to the present disclosure;
Fig. 2 shows an isometric view of the wearable support structure of Fig. 1;
Fig. 3 shows a side view of the wearable support structure of Fig. 1;
Fig. 4 shows schematically, a gait cycle of a part of a human body with attached thereon the wearable support structure of Fig. 1;
Fig. 5 shows in more detail a back view of a wearable support structure according to the present disclosure;
Fig. 6 shows an isometric view of the wearable support structure of Fig. 5;
Fig. 7 shows a side view of the wearable support structure of Fig. 5;

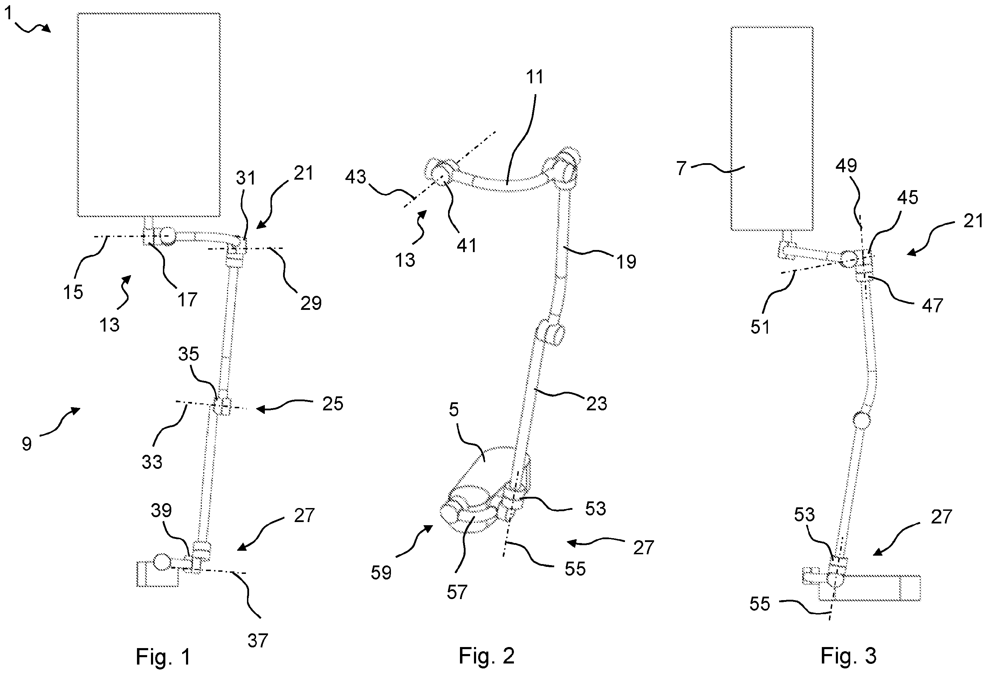

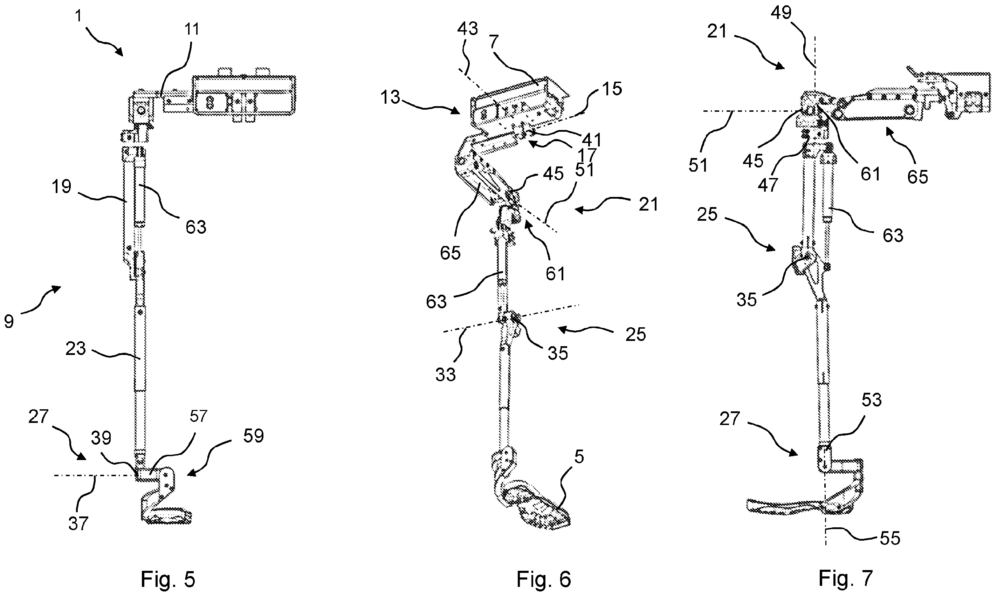

The wearable support structure 1 is arranged for relieving a human body 3 during walking, while the human body 3 is carrying a load at the back of the human body 3. In figures 1 to 4, the parts of the wearable support structure 1 to be attached to a right foot of a user are shown. In figures 5 to 7, parts of the wearable support structure 1 to be attached to a left foot of a user are shown. The respective parts of the wearable support structure 1 to be attached to the other foot of a user, are composed mutatis mutandis in a symmetrical way. The wearable support structure 1 is connected to the human body 3 via a load support 7 and two foot attachments 5.

The two foot attachments may be formed as a shoe. One of the foot attachments 5 is arranged to be connected to a left foot of the human body 3 the other foot attachments 5 is arranged to be connected to a right foot the human body 3. The load support 7 is provided to support the load while the human body 3 is carrying the load, and the wearable support structure 1 furthermore comprises two leg structures 9.

Each leg structure 9 is composed of a first rigid member 11, a second rigid member 19, a third rigid member 23, and a fourth rigid member 57.

The first rigid member 11 supports the load support 7 and is pivotally connected to the load support 7 via a first pivot arrangement 13. The first pivot arrangement 13 is provided below the load support 7 and comprises a first pivot 17 and a second pivot 41. The second pivot 41 is provided between the first rigid member 11 and the first pivot 17. When attached to a corresponding leg of the human body 3, the pivot axis 15 of the first pivot 17 is parallel to the coronal plane of the human body 3. The pivot axis 15 of the first pivot 17 is extending in a virtual plane that is parallel to the transverse plane of the human body 3 and is substantially horizontal during walking. A pivot axis 43 of the second pivot 41 is perpendicular to the pivot axis 15 of the first pivot 17.

The second rigid member 19 supports the load support 7 via the first rigid member 11 and is pivotally connected to the first rigid member 11 via a second pivot arrangement 21. The second rigid member 19 is provided at a side of a leg of the human body 3 that is opposite to the other leg of the human body 3.The second pivot arrangement 21 comprises a first pivot 31, a second pivot 45 and a third pivot 47. When attached to a corresponding leg of the human body 3, the pivot axis 29 of the first pivot 31 is parallel to the coronal plane of the human body 3, and the pivot axis 51 of the second pivot 45 is substantially parallel to the thigh of the corresponding leg of the user. During a swing phase of a corresponding leg of the human body 3, a pivot axis 29 of the first pivot 31 is parallel to the bending axis of a hip joint of the human body 3. The second pivot 45 and the third pivot 47 are provided between the first pivot 31 and the second rigid member 19. The pivot axes 29, 51, 49 of the first pivot 31, second pivot 45 and third pivot 47 are arranged perpendicular to each other.

The third rigid member 23 supports the load support 7 via the first rigid member 11 and the second rigid member 19. The third rigid member 23 is provided at a side of a leg of the human body 3 that is opposite to the other leg of the human body 3. The third rigid member 23 is pivotally connected to the second rigid member 19 via a third pivot arrangement 25, and pivotally connected to the foot attachment 5 via a fourth pivot arrangement 27. The third pivot arrangement 25 comprises a first pivot 35 and the fourth pivot arrangement 27 comprises a first pivot 39 and a second pivot 53. The second pivot 53 of the fourth pivot arrangement 27 is provided between the third rigid member 23 and the first pivot 39 of the fourth pivot arrangement 27. When attached to a corresponding leg of the human body 3, the pivot axis 33 of the first pivot 35 of the third pivot arrangement 25 and the pivot axis 37 of the first pivot 39 of the fourth pivot arrangement 27 are parallel to the coronal plane of the human body 3. During a stance phase of the corresponding leg of the human body 3, a pivot axis 33 of the first pivot 35 of the third pivot arrangement 25 is parallel to the bending axis of a knee joint of the corresponding leg of the human body 3, and a pivot axis 37 of the first pivot 39 of the fourth pivot arrangement 27 is parallel to the bending axis of an ankle joint of the corresponding leg of the human body 3. A pivot axis 55 of the second pivot 53 is perpendicular to the pivot axis of the first pivot 35 of the third pivot arrangement 25.

The fourth rigid member 57 is provided between the fourth pivot arrangement 27 and a fifth pivot arrangement 59 that is attached to the foot attachment 5. The fifth pivot arrangement 59 is releasably connected via a bolt to the corresponding foot attachment 5. During use, the fifth pivot arrangement is provided behind the back of a foot of the human body 3.

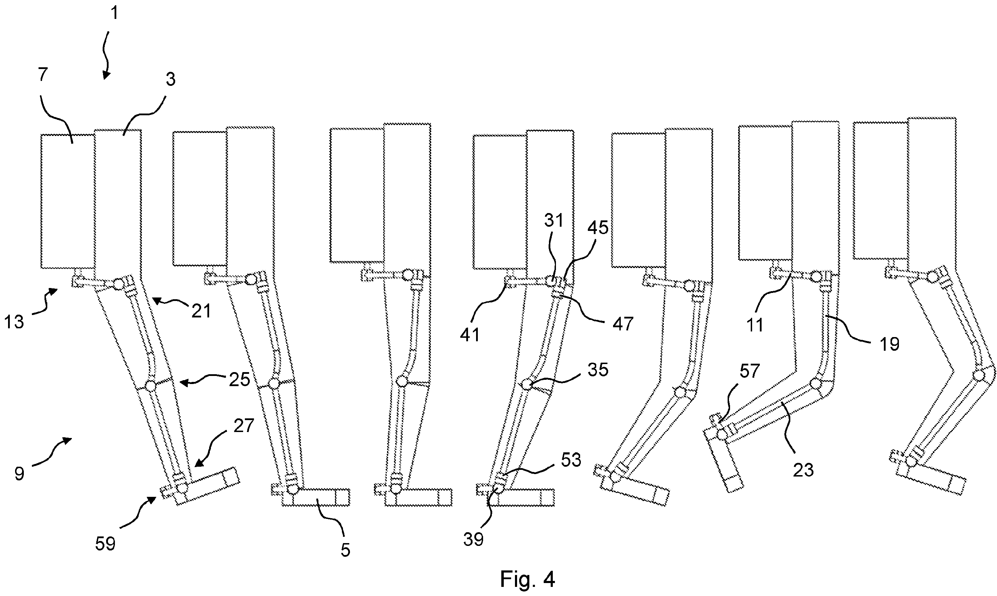

The wearable support structure 1 is easy to use and provides a comfortable experience to the user while realising a relative large relieve to the user during walking or bending. Several steps during a gait cycle of the human body are show schematically in figure 4, wherein the wearable support structure 1 is attached to the right leg of the human body 3.

The first rigid member 11 is movable between a first position and a second position such that a minimum distance between the second pivot arrangement 21 and the load support 7 varies during a gait cycle of the human body 3, and a minimum distance between the first pivot arrangement 13 and the third pivot arrangement 25 varies during a gait cycle of the human body 3. In a stance phase of the human body 3, the minimum distance between the second pivot arrangement 21 and the load support 7 is different for the two leg structures 9.

The second pivot arrangement 21 is provided with a spring element 61 for biasing the second rigid member 19 relative to the first rigid member 11 about the pivot axis 51 of the second pivot 45 of the second pivot arrangement 21. During use of the wearable support structure 1 when attached to a corresponding leg of the human body 3, the spring element 61 biases the corresponding leg of the user towards a predetermined orientation for walking. The predetermined orientation corresponds to a position of the corresponding leg and the foot wherein the front side of the foot is biased into the walking direction.

For providing the appropriate support, the wearable support structure is provided with a first dampening arrangement 63 and a second dampening arrangement 65.

The first dampening arrangement 63 damps the leg structure 9 during a stance phase of the corresponding leg of the user by damping the pivoting of the first pivot 35 of the third pivot arrangement 25. A first side of the first dampening arrangement 63 is connected to the second rigid member 19 and a second side thereof is connected to the third rigid member 23.The third pivot arrangement 25 and the first dampening arrangement 63 allow the third rigid member 23 to pivot relative to the second rigid member 19 during the swing phase of the corresponding leg of the human body 3 and to lock the third rigid member 23 in a position relative to the second rigid member 19 during the stance phase of the corresponding leg of the human body 3.

The second dampening element 65 damps a movement of the second pivot arrangement 21 relative to the first pivot arrangement 13. This generates an upward force onto the load support 7 during a stance phase and damps a movement of the hip of the user relative to the load support 7.

The wearable support structure according to the second aspect, not according to the invention, differs mainly from the wearable support structure according to the invention in that the wearable support structure according to the second aspect is provided with one leg structure and one foot attachment. Elements of the wearable support structure according to the second aspect of the present disclosure are identical, or at least similar, to elements of the wearable support structure according to the invention.

## Claims

1. A wearable support structure (1) for at least partly relieving a human body (3) during walking and while said human body (3) is carrying a load at the back or the hip of said human body (3), said wearable support structure (1) comprising:
- two foot attachments (5), wherein one of said two foot attachments (5) is arranged to be connected to a left foot of said human body (3) and wherein the other of said two foot attachments (5) is arranged to be connected to a right foot of said human body (3);
- a load support (7) arranged to support said load while said human body (3) is carrying said load; and
- two leg structures (9), each of said two leg structures (9) comprising:
- a first rigid member (11) arranged for supporting said load support (7) and pivotally connected, via a first pivot arrangement (13), to said load support (7), wherein a pivot axis (15) of a first pivot (17) of said first pivot arrangement (13), during use, is extending in a virtual plane that is parallel to a transverse plane of said human body (3) and, preferably, at least substantially horizontal, preferably, wherein said first pivot arrangement (13) is provided below said load support (7);
- a second rigid member (19) arranged for supporting said load support (7), via said first rigid member (11), and pivotally connected, via a second pivot arrangement (21), to said first rigid member (11);
- a third rigid member (23) arranged for supporting said load support (7) via said first rigid member (11) and said second rigid member (19), and pivotally connected, via a third pivot arrangement (25), to said second rigid member (19) and pivotally connected, via a fourth pivot arrangement (27), to a respective one of said two foot attachments (5);
wherein said first rigid member (11) is movable between a first position and a second position such that a minimum distance between said second pivot arrangement (21) and said load support (7) varies during a gait cycle of said human body (3), **characterized in that**, said fourth pivot arrangement (27) comprises a second pivot (53), wherein a pivot axis (55) of said second pivot (53) is perpendicular to said pivot axis (33) of said first pivot (35) of said third pivot arrangement (25).

2. The wearable support structure (1) according to claim 1, wherein said first rigid member (11) is further arranged for moving between said first position and said second position, such that, a minimum distance between said first pivot arrangement (13) and said third pivot arrangement (25) varies during said gait cycle.

3. The wearable support (1) structure according to claim 1, wherein said first rigid member (11) is further arranged for moving between said first position and said second position, such that, in a stance phase of said human body (3), a minimum distance between said second pivot arrangement (21) and said load support (7) is different for said two leg structures (9).

4. The wearable support structure (1) according to claim 1, 2 or 3, wherein a pivot axis (29) of a first pivot (31) of said second pivot arrangement (21), during a swing phase of a corresponding leg of said human body (3), is at least substantially parallel to a bending axis of a hip joint of said human body (3), preferably parallel to a bending axis of a hip joint of said human body (3).

5. The wearable support structure (1) according to any one of the preceding claims, wherein, during a stance phase of a corresponding leg of said human body (3), a pivot axis (33) of a first pivot (35) of said third pivot arrangement (25) is at least substantially parallel to a bending axis of a knee joint of said corresponding leg of said human body (3), preferably parallel to a bending axis of a knee joint of said corresponding leg of said human body (3).

6. The wearable support structure (1) according to any one of the preceding claims, wherein, during a stance phase of a corresponding leg of said human body (3), a pivot axis (37) of a first pivot (39) of said fourth pivot arrangement (27) is at least substantially parallel to a bending axis of an ankle joint of said corresponding leg of said human body (3), preferably parallel to a bending axis of an ankle joint of said corresponding leg of said human body (3).

7. The wearable support structure (1) according to any one of the preceding claims, wherein said first pivot arrangement (13) comprises a second pivot (41), wherein a pivot axis (43) of said second pivot (41) is perpendicular to said pivot axis (15) of said first pivot (17) of said first pivot arrangement (13), preferably wherein said second pivot (41) of said first pivot arrangement (13) is provided between said first rigid member (11) and said first pivot (17) of said first pivot arrangement (13).

8. The wearable support structure (1) according to any one of the preceding claims, wherein said second pivot arrangement (21) comprises a second pivot (45) and/or a third pivot (47), wherein pivot axes (29, 51, 49) of said first pivot (31), second pivot (45) and third pivot (47) of said second pivot arrangement (21) are arranged perpendicular to each other, preferably wherein said second pivot (45 )and/or said third pivot (47) are provided between said first pivot (31) of said second pivot arrangement (21) and said second rigid member (19).

9. The wearable support structure (1) according to any one of the preceding claims, wherein said second pivot (53) of said fourth pivot arrangement (27) is provided between said third rigid member (23) and said first pivot (39) of said fourth pivot arrangement (27).

10. The wearable support structure (1) according to any one of the preceding claims, wherein said wearable support structure (1) is arranged for being only connected to said human body (3) via said load support (7) and said two foot attachments (5).

11. The wearable support structure (1) according to any one of the preceding claims, wherein said second rigid member (19) and said third rigid member (23) are arranged for being provided, during use, at a side of a leg of said human body (3) that is opposite to the other leg of said human body (3).

12. The wearable support structure (1) according to any one of the preceding claims, wherein said pivot axis (15) of said first pivot (17) of said first pivot arrangement (13), said pivot axis (29) of said first pivot (31) of said second pivot arrangement (21), said pivot axis (33) of said first pivot (35) of said third pivot arrangement (25) and/or said pivot axis (37) of said first pivot (39) of said fourth pivot arrangement (27) are arranged for being, during use, parallel to a coronal plane of said human body (3) or substantially perpendicular to a sagittal plane of said human body (3).

13. The wearable support structure (1) according to any one of the preceding claims, wherein each of said two leg structures (9) comprises a fourth rigid member (57) that is provided between said fourth pivot arrangement and a fifth pivot arrangement (59) of said wearable support structure (1) that is attached to said foot attachment (5).

14. The wearable support structure (1) according to claim 13, wherein said fifth pivot arrangement (59) is arranged for being provided, during use, behind the back of a foot of said human body (3).

15. The wearable support structure (1) according to any one of the preceding claims, wherein each of said two foot attachment (5) is formed as a shoe.

## Patentansprüche

1. Tragbare Stützstruktur (1) zur wenigstens teilweisen Entlastung eines menschlichen Körpers (3) während des Gehens und während der menschliche Körper (3) eine Last auf dem Rücken oder der Hüfte des menschlichen Körpers (3) trägt, wobei die tragbare Stützstruktur (1) umfasst:
- zwei Fußbefestigungen (5), wobei eine der beiden Fußbefestigungen (5) zum Verbinden so mit einem linken Fuß des menschlichen Körpers (3) angeordnet ist und wobei die andere der beiden Fußbefestigungen (5) zum Verbinden mit einem rechten Fuß des menschlichen Körpers (3) angeordnet ist;
- eine Laststütze (7), angeordnet zum Stützen der Last, während der menschliche Körper (3) die Last trägt; und
- zwei Beinstrukturen (9), wobei jede der beiden Beinstrukturen (9) umfasst:
- ein erstes starres Element (11), das zum Tragen der Laststütze (7) angeordnet und über eine erste Schwenkanordnung (13) schwenkbar mit der Laststütze (7) verbunden ist, wobei eine Schwenkachse (15) einer ersten Gelenkverbindung (17) der ersten Schwenkanordnung (13) während der Verwendung in einer virtuellen Ebene verläuft, die parallel zu einer Querebene des menschlichen Körpers (3) und vorzugsweise wenigstens im Wesentlichen horizontal ist, wobei die erste Schwenkanordnung (13) vorzugsweise unterhalb der Laststütze (7) bereitgestellt ist;
- ein zweites starres Element (19), das zum Tragen der Laststütze (7) über das erste starre Element (11) angeordnet ist und über eine zweite Schwenkanordnung (21) schwenkbar mit dem ersten starren Element (11) verbunden ist;
- ein drittes starres Element (23), das zum Tragen der Laststütze (7) über das erste starre Element (11) und das zweite starre Element (19) angeordnet ist und über eine dritte Schwenkanordnung (25) schwenkbar mit dem zweiten starren Element (19) verbunden ist und über eine vierte Schwenkanordnung (27) schwenkbar mit einer entsprechenden der beiden Fußbefestigungen (5) verbunden ist;
wobei das erste starre Element (11) zwischen einer ersten Position und einer zweiten Position beweglich ist, so dass ein Mindestabstand zwischen der zweiten Schwenkanordnung (21) und der Laststütze (7) während eines Schrittzyklus des menschlichen Körpers (3) variiert, **dadurch gekennzeichnet, dass** die vierte Schwenkanordnung (27) eine zweite Gelenkverbindung (53) umfasst, wobei eine Schwenkachse (55) der zweiten Gelenkverbindung (53) senkrecht zu der Schwenkachse (33) der ersten Gelenkverbindung (35) der dritten Schwenkanordnung (25) steht.

2. Tragbare Stützstruktur (1) nach Anspruch 1, wobei das erste starre Element (11) ferner zur Bewegung zwischen der ersten Position und der zweiten Position angeordnet ist, so dass ein Mindestabstand zwischen der ersten Schwenkanordnung (13) und der dritten Schwenkanordnung (25) während des Schrittzyklus variiert.

3. Tragbare Stützstruktur (1) nach Anspruch 1, wobei das erste starre Element (11) ferner zur Bewegung zwischen der ersten Position und der zweiten Position angeordnet ist, so dass in einer Standphase des menschlichen Körpers (3) ein Mindestabstand zwischen der zweiten Schwenkanordnung (21) und der Laststütze (7) für die beiden Beinstrukturen (9) verschieden ist.

4. Tragbare Stützstruktur (1) nach Anspruch 1, 2 oder 3, wobei eine Schwenkachse (29) einer ersten Gelenkverbindung (31) der zweiten Schwenkanordnung (21) während einer Schwingphase eines entsprechenden Beins des menschlichen Körpers (3) wenigstens im Wesentlichen parallel zu einer Biegeachse eines Hüftgelenks des menschlichen Körpers (3), vorzugsweise parallel zu einer Biegeachse eines Hüftgelenks des menschlichen Körpers (3), ist.

5. Tragbare Stützstruktur (1) nach einem der vorstehenden Ansprüche, wobei während einer Standphase eines entsprechenden Beins des menschlichen Körpers (3) eine Schwenkachse (33) einer ersten Gelenkverbindung (35) der dritten Schwenkanordnung (25) wenigstens im Wesentlichen parallel zu einer Biegeachse eines Kniegelenks des entsprechenden Beins des menschlichen Körpers (3), vorzugsweise parallel zu einer Biegeachse eines Kniegelenks des entsprechenden Beines des menschlichen Körpers (3), ist.

6. Tragbare Stützstruktur (1) nach einem der vorstehenden Ansprüche, wobei während einer Standphase eines entsprechenden Beins des menschlichen Körpers (3) eine Schwenkachse (37) einer ersten Gelenkverbindung (39) der vierten Schwenkanordnung (27) wenigstens im Wesentlichen parallel zu einer Biegeachse eines Sprunggelenks des entsprechenden Beins des menschlichen Körpers (3), vorzugsweise parallel zu einer Biegeachse eines Sprunggelenks des entsprechenden Schenkels des menschlichen Körpers (3), ist.

7. Tragbare Stützstruktur (1) nach einem der vorstehenden Ansprüche, wobei die erste Schwenkanordnung (13) eine zweite Gelenkverbindung (41) umfasst, wobei eine Schwenkachse (43) der zweiten Gelenkverbindung (41) senkrecht zu der Schwenkachse (15) der ersten Gelenkverbindung (17) der ersten Schwenkanordnung (13) ist, wobei vorzugsweise die zweite Gelenkverbindung (41) der ersten Schwenkanordnung (13) zwischen dem ersten starren Element (11) und der ersten Gelenkverbindung (17) der ersten Schwenkanordnung (13) bereitgestellt ist.

8. Tragbare Stützstruktur (1) nach einem der vorstehenden Ansprüche, wobei die zweite Schwenkanordnung (21) eine zweite Gelenkverbindung (45) und/oder eine dritte Gelenkverbindung (47) umfasst, wobei Schwenkachsen (29, 51, 49) der ersten Gelenkverbindung (31), der zweiten Gelenkverbindung (45) und der dritten Gelenkverbindung (47) der zweiten Schwenkanordnung (21) senkrecht zueinander angeordnet sind, wobei vorzugsweise die zweite Gelenkverbindung (45) und/oder die dritte Gelenkverbindung (47) zwischen der ersten Gelenkverbindung (31) der zweiten Schwenkanordnung (21) und dem zweiten starren Element (19) bereitgestellt sind.

9. Tragbare Stützstruktur (1) nach einem der vorstehenden Ansprüche, wobei die zweite Gelenkverbindung (53) der vierten Schwenkanordnung (27) zwischen dem dritten starren Element (23) und der ersten Gelenkverbindung (39) der vierten Schwenkanordnung (27) bereitgestellt ist.

10. Tragbare Stützstruktur (1) nach einem der vorstehenden Ansprüche, wobei die tragbare Stützstruktur (1) so angeordnet ist, dass sie nur über die Laststütze (7) und die beiden Fußbefestigungen (5) mit dem menschlichen Körper (3) verbunden ist.

11. Tragbare Stützstruktur (1) nach einem der vorstehenden Ansprüche, wobei das zweite starre Element (19) und das dritte starre Element (23) so angeordnet sind, dass sie während der Verwendung an einer Seite eines Beins des menschlichen Körpers (3), die dem anderen Bein des menschlichen Körpers (3) gegenüberliegt, bereitgestellt sind.

12. Tragbare Stützstruktur (1) nach einem der vorstehenden Ansprüche, wobei die Schwenkachse (15) der ersten Gelenkverbindung (17) der ersten Schwenkanordnung (13), die Schwenkachse (29) der ersten Gelenkverbindung (31) der zweiten Schwenkanordnung (21), die Schwenkachse (33) der ersten Gelenkverbindung (35) der dritten Schwenkanordnung (25) und/oder die Schwenkachse (37) der ersten Gelenkverbindung (39) der vierten Schwenkanordnung (27) angeordnet sind, um während der Verwendung parallel zu einer Koronalebene des menschlichen Körpers (3) oder im Wesentlichen senkrecht zu einer Sagittalebene des menschlichen Körpers (3) zu sein.

13. Tragbare Stützstruktur (1) nach einem der vorstehenden Ansprüche, wobei jede der beiden Beinstrukturen (9) ein viertes starres Element (57) umfasst, das zwischen der vierten Schwenkanordnung und einer fünften Schwenkanordnung (59) der tragbaren Stützstruktur (1) bereitgestellt ist, die an der Fußbefestigung (5) befestigt ist.

14. Tragbare Stützstruktur (1) nach Anspruch 13, wobei die fünfte Schwenkanordnung (59) so angeordnet ist, dass sie während der Verwendung hinter der Rückseite eines Fußes des menschlichen Körpers (3) bereitgestellt ist.

15. Tragbare Stützstruktur (1) nach einem der vorstehenden Ansprüche, wobei jede der beiden Fußbefestigungen (5) als ein Schuh gestaltet ist.

## Revendications

1. Structure de support portable (1) pour soulager au moins partiellement un corps humain (3) pendant la marche et pendant que ledit corps humain (3) porte une charge au niveau du dos ou de la hanche dudit corps humain (3), ladite structure de support portable (1) comprenant :
- deux fixations pour les pieds (5), dans laquelle l'une desdites fixations pour les pieds (5) est agencée pour être reliée à un pied gauche dudit corps humain (3) et dans laquelle l'autre desdites deux fixations pour les pieds (5) est agencée pour être reliée à un pied droit dudit corps humain (3) ;
- un support de charge (7) agencé pour supporter ladite charge pendant que ledit corps humain (3) porte ladite charge ; et
- deux structures de jambe (9), chacune desdites deux structures de jambe (9) comprenant :
- un premier élément rigide (11) agencé pour supporter ledit support de charge (7) et relié de manière pivotante, par l'intermédiaire d'un premier agencement de pivotement (13), audit support de charge (7), où un axe de pivotement (15) d'un premier pivot (17) dudit premier agencement de pivotement (13), pendant l'utilisation, s'étend dans un plan virtuel qui est parallèle à un plan transversal dudit corps humain (3) et, de préférence, au moins sensiblement horizontal, de préférence, où ledit premier agencement de pivotement (13) est prévu sous ledit support de charge (7) ;
- un deuxième élément rigide (19) agencé pour supporter ledit support de charge (7), par l'intermédiaire dudit premier élément rigide (11), et relié de manière pivotante, par l'intermédiaire d'un deuxième agencement de pivotement (21), audit premier élément rigide (11) ;
- un troisième élément rigide (23) agencé pour supporter ledit support de charge (7) par l'intermédiaire dudit premier élément rigide (11) et dudit deuxième élément rigide (19), et relié de manière pivotante, par l'intermédiaire d'un troisième agencement de pivotement (25), audit deuxième élément rigide (19) et relié de manière pivotante, par l'intermédiaire d'un quatrième agencement de pivotement (27) à une fixation respective desdites deux fixations pour les pieds (5) ;
dans laquelle ledit premier élément rigide (11) est mobile entre une première position et une seconde position, de sorte qu'une distance minimale entre ledit deuxième agencement de pivotement (21) et ledit support de charge (7) varie pendant un cycle de démarche dudit corps humain (3),
**caractérisée en ce que** ledit quatrième agencement de pivotement (27) comprend un deuxième pivot (53), où un axe de pivotement (55) dudit deuxième pivot (53) est perpendiculaire audit axe de pivotement (33) dudit premier pivot (35) dudit troisième agencement de pivotement (25).

2. Structure de support portable (1) selon la revendication 1, dans laquelle ledit premier élément rigide (11) est en outre agencé pour se déplacer entre ladite première position et ladite seconde position, de sorte que, une distance minimale entre ledit premier agencement de pivotement (13) et ledit troisième agencement de pivotement (25) varie pendant ledit cycle de démarche.

3. Structure de support portable (1) selon la revendication 1, dans laquelle ledit premier élément rigide (11) est en outre agencé pour se déplacer entre ladite première position et ladite seconde position, de sorte que, lors d'une phase d'appui dudit corps humain (3), une distance minimale entre ledit deuxième agencement de pivotement (21) et ledit support de charge (7) soit différente pour lesdites deux structures de jambe (9).

4. Structure de support portable (1) selon la revendication 1, 2 ou 3, dans laquelle un axe de pivotement (29) d'un premier pivot (31) dudit deuxième agencement de pivotement (21), pendant une phase de balancement d'une jambe correspondante dudit corps humain (3), est au moins sensiblement parallèle à un axe de flexion d'une articulation de la hanche dudit corps humain (3), de préférence parallèle à un axe de flexion d'une articulation de la hanche dudit corps humain (3).

5. Structure de support portable (1) selon l'une quelconque des revendications précédentes, dans laquelle, pendant une phase d'appui d'une jambe correspondante dudit corps humain (3), un axe de pivotement (33) d'un premier pivot (35) dudit troisième agencement de pivotement (25) est au moins sensiblement parallèle à un axe de flexion d'une articulation du genou de ladite jambe correspondante dudit corps humain (3), de préférence parallèle à un axe de flexion d'une articulation du genou de ladite jambe correspondante dudit corps humain (3).

6. Structure de support portable (1) selon l'une quelconque des revendications précédentes, dans laquelle, pendant une phase d'appui d'une jambe correspondante dudit corps humain (3), un axe de pivotement (37) d'un premier pivot (39) dudit quatrième agencement de pivotement (27) est au moins sensiblement parallèle à un axe de flexion d'une articulation de la cheville de ladite jambe correspondante dudit corps humain (3), de préférence parallèle à un axe de flexion d'une articulation de la cheville de ladite jambe correspondante dudit corps humain (3).

7. Structure de support portable (1) selon l'une quelconque des revendications précédentes, dans laquelle ledit premier agencement de pivotement (13) comprend un deuxième pivot (41), dans laquelle un axe de pivotement (43) dudit deuxième pivot (41) est perpendiculaire audit axe de pivotement (15) dudit premier pivot (17) dudit premier agencement de pivotement (13), de préférence dans laquelle ledit deuxième pivot (41) dudit premier agencement de pivotement (13) est prévu entre ledit premier élément rigide (11) et ledit premier pivot (17) dudit premier agencement de pivotement (13).

8. Structure de support portable (1) selon l'une quelconque des revendications précédentes, dans laquelle ledit deuxième agencement de pivotement (21) comprend un deuxième pivot (45) et/ou un troisième pivot (47), dans laquelle des axes de pivotement (29, 51, 49) desdits premier pivot (31), deuxième pivot (45) et troisième pivot (47) dudit deuxième agencement de pivotement (21) sont agencés perpendiculairement les uns aux autres, de préférence dans laquelle ledit deuxième pivot (45) et/ou ledit troisième pivot (47) sont prévus entre ledit premier pivot (31) dudit deuxième agencement de pivotement (21) et ledit deuxième élément rigide (19).

9. Structure de support portable (1) selon l'une quelconque des revendications précédentes, dans laquelle ledit deuxième pivot (53) dudit quatrième agencement de pivotement (27) est prévu entre ledit troisième élément rigide (23) et ledit premier pivot (39) dudit quatrième agencement de pivotement (27).

10. Structure de support portable (1) selon l'une quelconque des revendications précédentes, dans laquelle ladite structure de support portable (1) est agencée pour être reliée audit corps humain (3) uniquement par l'intermédiaire dudit support de charge (7) et desdites deux fixations pour les pieds (5).

11. Structure de support portable (1) selon l'une quelconque des revendications précédentes, dans laquelle ledit deuxième élément rigide (19) et ledit troisième élément rigide (23) sont agencés de manière à être prévus, pendant l'utilisation, au niveau d'un côté d'une jambe dudit corps humain (3) qui est opposée à l'autre jambe dudit corps humain (3).

12. Structure de support portable (1) selon l'une quelconque des revendications précédentes, dans laquelle ledit axe de pivotement (15) dudit premier pivot (17) dudit premier agencement de pivotement (13), ledit axe de pivotement (29) dudit premier pivot (31) dudit deuxième agencement de pivotement (21), ledit axe de pivotement (33) dudit premier pivot (35) dudit troisième agencement de pivotement (25) et/ou ledit axe de pivotement (37) dudit premier pivot (39) dudit quatrième agencement de pivotement (27) sont agencés de manière à être, pendant l'utilisation, parallèles à un plan coronal dudit corps humain (3) ou sensiblement perpendiculaires à un plan sagittal dudit corps humain (3).

13. Structure de support portable (1) selon l'une quelconque des revendications précédentes, dans laquelle chacune desdites deux structures de jambe (9) comprend un quatrième élément rigide (57) qui est prévu entre ledit quatrième agencement de pivotement et un cinquième agencement de pivotement (59) de ladite structure de support portable (1) qui est fixé à ladite fixation pour les pieds (5).

14. Structure de support portable (1) selon la revendication 13, dans laquelle ledit cinquième agencement de pivotement (59) est agencé pour être prévu, pendant l'utilisation, derrière l'arrière d'un pied dudit corps humain (3).

15. Structure de support portable (1) selon l'une quelconque des revendications précédentes, dans laquelle chacune desdites deux fixations pour les pieds (5) se présente sous la forme d'une chaussure.
